Europäisches Patentamt

European Patent Office

Office européen des brevets

(19)

(11) Veröffentlichungsnummer: **0 167 833**
**B1**

(12) **EUROPÄISCHE PATENTSCHRIFT**

(45) Veröffentlichungstag der Patentschrift: **11.04.90**

(51) Int. Cl.⁵: **H 02 B 1/26**

(21) Anmeldenummer: **85106982.3**

(22) Anmeldetag: **05.06.85**

(54) Schaltschrank mit Montageplatte.

(30) Priorität: **16.06.84 DE 8418270 u**

(43) Veröffentlichungstag der Anmeldung:
**15.01.86 Patentblatt 86/03**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(56) Entgegenhaltungen:
**DE-A-1 465 775**
**DE-A-2 347 284**
**DE-U-7 322 469**

(73) Patentinhaber: **Rittal-Werk Rudolf Loh GmbH &
Co. KG
Auf dem Stützelberg
D-6348 Herborn (DE)**

(72) Erfinder: **Debus, Jürgen
Am Ebersbach 50
D-6344 Dietzhölztal 1 (DE)**
Erfinder: **Zachrei, Jürgen
Am Hungersberg 2
D-6341 Dillenburg 8 (DE)**
Erfinder: **Koch, Hans-Georg
Sonnenstrasse 28
D-6344 Dietzhölzthal 1 (DE)**
Erfinder: **Bütergerds, Helmut
Jahnstrasse 12
D-6345 Eschenburg 1 (DE)**

(74) Vertreter: **Vogel, Georg
Hermann-Essig-Strasse 35 Postfach 105
D-7141 Schwieberdingen (DE)**

EP 0 167 833 B1

Courier Press, Leamington Spa, England.

## Beschreibung

Die Erfindung betrifft einen Schaltschrank mit einem aus Rahmenschenkeln zusammengesetzten und mittels Wandelementen und einer Schranktür verschließbaren Rahmengestell und mit einer parallel zur Rückwand am Rahmengestell befestigbaren Montageplatte.

Die Montageplatte dient zur Befestigung von Bauteilen im Schaltschrank und ist meist mit einem Raster von Befestigungsbohrungen versehen, wie die DE-OS 23 47 284 zeigt. Da diese Montageplatten sehr schwer sind, bereitet der Einbau in den Schaltschrank erhebliche Schwierigkeiten, zumal sie mit ihrer Unterkante exakt in eine im Schaltschrank befestigte Halteschiene oder dgl. eingesetzt werden muß. Aus diesem Grunde sind auch schon Vorrichtungen zum Tragen der Montageplatte geschaffen worden, mit denen die Montageplatte auch im Schaltschrank noch so abgesenkt werden kann, daß ihre Unterkante mit der Aufnahme für die Halteschiene oder dgl. in diese abgesenkt werden kann, wie das DE-GM 83 10 727 zeigt. Der Einbau der Montageplatte ist aber dennoch schwierig und erfordert stets noch ein manuelles Führen der Montageplatte zum Einsetzen in die Halteschiene oder ähnliche Halteelemente.

Es ist Aufgabe der Erfindung, einen Schaltschrank der eingangs erwähnten Art so auszugestalten, daß der Einbau der Montageplatte wesentlich erleichtert wird, wobei insbesondere während des Einbringens der Montageplatte in den Schaltschrank stets eine eindeutige Führung gegeben ist und die Montageplatte dann in der Endstellung automatisch mit der Unterkante festgehalten wird.

Diese Aufgabe wird nach der Erfindung dadurch gelöst, daß das Rahmengestell zwischen den beiden unteren seitlichen und horizontal verlaufenden Rahmenschenkeln mindestens zwei parallel dazu ausgerichtete Führungsschienen mit einem nach oben stehenden Führungssteg aufweist, daß an der Unterseite der Montageplatte auf den Abstand der Führungsschienen abgestimmt Kunststoff-Führungsblöcke mit jeweils einer Führungsnut zur Aufnahme des Führungssteges der zugeordneten Führungsschiene angebracht sind, daß die Kunststoff-Führungsblöcke mit parallel zur Montageplatte ausgerichteten und zur Unterseite hin offenen Steckaufnahmen versehen sind, daß am Rahmengestell im hinteren Bereich des Rahmengestelles oder der Führungsschienen auf den Abstand der Steckaufnahmen in den Kunststoff-Führungsblöcken abgestimmt nach oben ragende Steckbolzen zum Einführen in die Steckaufnahmen und zum Festhalten der Unterkante der Montageplatte befestigt sind und daß die Montageplatte im Bereich ihrer Oberkante mittels Befestigungswinkeln an dem Rahmengestell festlegbar ist.

Die Montageplatte wird beim Einsetzen in den Schaltschrank mit den Kunststoff-Führungsblöcken auf den Führungsschienen aufgesetzt und eindeutig geführt, so daß in der Einschubendstellung die Steckaufnahmen die richtige Stellung zu den am Rahmengestell befestigten Steckbolzen einnehmen. Dabei ist vorzugsweise vorgesehen, daß die Einschubbewegung der geneigt auf die Führungsschienen gesetzten Montageplatte so begrenzt ist, daß sich beim Aufrichten der Montageplatte in die Vertikale die Steckaufnahmen der Kunststoff-Führungsblöcke auf die Steckbolzen aufschieben. Die Montageplatte braucht dann nur noch im Bereich der Oberkante mit dem Rahmengestell verbunden zu werden.

Nach einer Ausgestaltung ist dabei vorgesehen, daß die Führungsstege der Führungsschienen bündig mit den bündigen Oberseiten der unteren, horizontalen Rahmenschenkel des Rahmengestelles abschließen, damit die Führungsstege nicht in den ausnützbaren Innenraum des Schaltschrankes ragen.

Eine Verbesserung der Führung der geneigt einschiebbaren Montageplatte wird nach einer Ausgestaltung dadurch erreicht, daß die Kunststoff-Führungsblöcke an der Unterkante und der Vorderseite der Montageplatte vorstehen und daß die Führungsnuten im Bereich der unteren vorderen Kante senkrecht zur Ebene der Montageplatte in die Kunststoff-Führungsblöcke eingebracht sind, wobei der Nutgrund der Führungsnuten jeweils im spitzen Winkel zur Montageplatte steht. Dabei hat sich eine Ausgestaltung als vollkommen ausreichend gezeigt, die dadurch gekennzeichnet ist, daß zwei Kunststoff-Führungsblöcke an den Enden der Unterkante der Montageplatte angebracht sind, die mit an den vertikalen Seiten der Montageplatte rechtwinklig nach hinten abgebogenen Seitenrändern bündig abschließen.

Die Anbringung der Kunststoff-Führungsblöcke an der Montageplatte ist dabei so gelöst, daß die Kunststoff-Führungsblöcke in der Oberseite einen parallel zur Montageplatte ausgerichteten Schlitz aufweisen, der ein Steckteil abteilt und daß das Steckteil durch eine Aussparung in einem an der Unterkante der Montageplatte rechtwinklig nach hinten abgebogenen Rand hinter die Montageplatte einführbar ist und den Kunststoff-Führungsblock an der Montageplatte festlegt. Dabei kann ein Paß- oder Preßsitz einen ausreichenden Halt sicherstellen.

Die als Sacklochbohrungen ausgebildeten Steckaufnahmen sind dabei im Bereich der Steckteile in die Unterseiten der Kunststoff-Führungsblöcke eingebracht, um die Montageplatte auch möglichst in kleinem Abstand zur Rückwand des Schaltschrankes anordnen zu können.

Das Aufschieben der Steckaufnahmen auf die Steckbolzen beim vertikalen Aufrichten der Montageplatte wird dadurch erleichtert, daß die Steckbolzen an ihren freien oberen Enden halbkugelförmig auslaufen.

Die Befestigung der Steckbolzen am Rahmengestell ist nach einer Ausgestaltung so ausgeführt, daß jeder Steckbolzen mit einem im Durchmesser reduzierten Gewindeteil versehen ist, das in ein am Rahmengestell oder an einer der Führungsschienen befestigtes Mutterteil eingeschraubt ist.

Zur Festlegung der Mutterteile am Rahmengestell sieht eine Ausgestaltung vor, daß die Rahmenschenkel des Rahmengestelles als Hohlprofilabschnitte ausgebildet sind, die einen im Querschnitt etwa quadratischen Innenraum aufweisen, daß zumindest ein Teil der Profilwände aller Rahmenschenkel mit Reihen von Löchern versehen sind und daß die Mutterteile in dem Innenraum des hinteren unteren und horizontal verlaufenden Rahmenschenkels verstellbar geführt und mittels zusätzlicher Schrauben daran festgelegt sind. Dazu ist ausreichend, wenn die oberen horizontalen und die inneren vertikalen Profilwände der unteren horizontalen Rahmenschenkel jeweils mit fluchtenden Reihen von Löchern versehen sind.

Soll die Montageplatte in größerem Abstand von der Rückwand des Schaltschrankes angeordnet werden, dann sieht eine Ausgestaltung vor, daß die Führungsstege der Führungsschienen mit Reihen von Löchern versehen sind und daß die Steckbolzen an Laschen befestigt sind, die an den Führungsschienen oder den parallel dazu verlaufenden seitlichen unteren Rahmenschenkeln angebracht sind.

Die Führungsstege der Führungsschienen können eine weitere Funktion mit übernehmen, wenn vorgesehen ist, daß in die Löcher der Führungsstege der Führungsschienen Mutterteile einsetzbar sind, die Spannschrauben zur Festlegung von Bodenblechen am Rahmengestell aufnehmen.

Die Verbindung der Oberkante der Montageplatte mit dem Rahmengestell ist nach einer Ausgestaltung so gelöst, daß die an den vertikalen Seiten der Montageplatte abgewinkelten Seitenränder oder der an der Oberkante der Montageplatte abgebogene Rand an den freien Kanten als Befestigungsflansche nach innen abgebogen sind, daß die Befestigungswinkel mit einem Befestigungsschenkel auf den Außenseiten der Befestigungsflansche verschraubt sind und daß die Befestigungswinkel mit anderen Befestigungsschenkeln mit den oberen seitlichen, horizontal verlaufenden Rahmenschenkeln oder dem hinteren oberen, horizontal verlaufenden Rahmenschenkel des Rahmengestelles verbunden sind.

Ist nach einer weiteren Ausgestaltung vorgesehen, daß die Befestigungswinkel die Oberkante der Montageplatte übergreifen, so daß die mit den oberen horizontalen Rahmenschenkeln des Rahmengestelles verbindbaren Befestigungsschenkel vor der Montageplatte angeordnet sind, dann kann die Montageplatte auch in dem durch die vier hinteren Rahmenschenkel des Rahmengestelles gebildeten vertikalen Rahmen angeordnet werden.

Damit die Verbindungsschrauben zwischen den Befestigungswinkeln und der Montageplatte die Belegung der Montageplatte mit Bauteilen nicht beeinträchtigt, sieht eine weitere Ausgestaltung vor, daß die den Befestigungsflanschen der Montageplatte zugeordneten Befestigungsschenkel der Befestigungswinkel mit Gewindebohrungen für mit Kopf versehene Verbindungsschrauben tragen und daß die Befestigungsflansche mit Durchgangsbohrungen für die Verbindungsschrauben und die Montageplatte mit fluchtenden Einführungsbohrungen für den Kopf der Verbindungsschrauben versehen sind.

Die Anzahl der Schrauben für die Verbindung zwischen dem Rahmengestell und den Befestigungswinkeln kann dadurch klein gehalten werden, daß die den oberen horizontalen Rahmenschenkeln des Rahmengestelles zugeordneten Befestigungsschenkel der Befestigungswinkel mit in ein Loch des Rahmenschenkels einführbarer Arretierungslaschen versehen sind und daß die Befestigungsschenkel mittels einer Schraube mit einem im Innenraum des Rahmenschenkels angeordneten und daran festgelegten Mutterteil verbunden sind. Pro Befestigungswinkel reicht dann eine Schraube aus und dennoch ist der Befestigungswinkel verdrehungssicher am Rahmengestell festgelegt.

Die Erfindung wird anhand eines in den Zeichnungen dargestellten Ausführungsbeispiels näher erläutert. Es zeigt:

Fig. 1 einen schematischen Schnitt, der den Aufbau des Schaltschrankes und die Montageplatte in der Einschubstellung und Einbaustellung erkennen läßt,

Fig. 2 den in Fig. 1 mit I bezeichneten Teilbereich,

Fig. 3 den in Fig. 1 mit II bezeichneten Teilbereich und

Fig 4 eine Teilvorderansicht mit der auf einer Führungsschiene geführten Montageplatte.

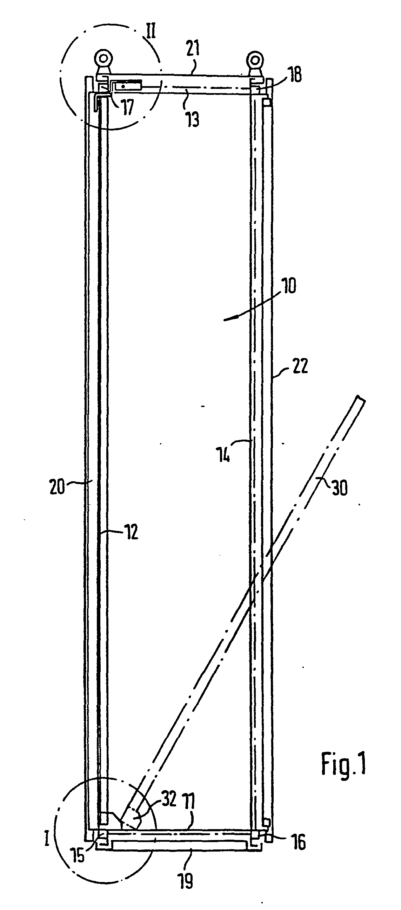

Der schematische Schnitt nach Fig. 1 läßt den Aufbau des Rahmengestelles 10 mit den Rahmenschenkeln erkennen. Im unteren Bereich bilden der hintere und der vordere horizontale Rahmenschenkel 15 und 16 mit den beiden seitlichen horizontalen Rahmenschenkeln, von denen nur der Rahmenschenkel 11 sichtbar ist, einen unteren horizontalen Rahmen. An den vier Ecken des Rahmens gehen die vier vertikalen Rahmenschenkel ab, von denen der hintere und vordere Rahmenschenkel 12 und 14 einer Schrankseite gezeigt sind. Im oberen Bereich bilden der hintere und der vordere Rahmenschenkel 17 und 18 mit den beiden seitlichen Rahmenschenkeln 13 den oberen horizontalen Rahmen, der mit den vier vertikalen Rahmenschenkeln verbunden ist. Die Bodenplatte 19, die Rückwand 20, die Deckplatte 21 und die Schranktür 22 verschließen das Rahmengestell, das auch an den beiden vertikalen Seiten mit Wandelementen verschlossen ist.

Das Rahmengestell 10 besteht also aus zwölf Rahmenschenkeln einheitlichen Querschnitts. Die als Hohlprofilabschnitte ausgebildeten Rahmenschenkel haben einen im Querschnitt etwa quadratischen Innenraum. An zwei einen rechten Winkel einschließenden Profilwänden gehen Flansche ab. Davon ist einer gerade und der andere L-förmig. Die Hohlprofilabschnitte sind so miteinander verbunden, daß die Flansche jeweils senkrecht zu den an einem Rahmenschenkel aufeinander stoßenden Seiten des Rahmengestelles 10 stehen. Die Profilwände, an denen die Flansche als Verlängerungen abgehen, sind mit jeweils einer Reihe von Löchern 24 versehen, die im Ausführungsbeispiel rechteckförmigen oder quadratischen Querschnitt aufweisen und in einheitlicher Lochteilung eingebracht sind.

Wie in Fig. 1 angedeutet ist, wird die Montageplatte 30 in Schrägstellung in den Schaltschrank eingeschoben, wobei sie sich auf Führungsstegen von Führungsschienen abstützt, wie noch gezeigt wird.

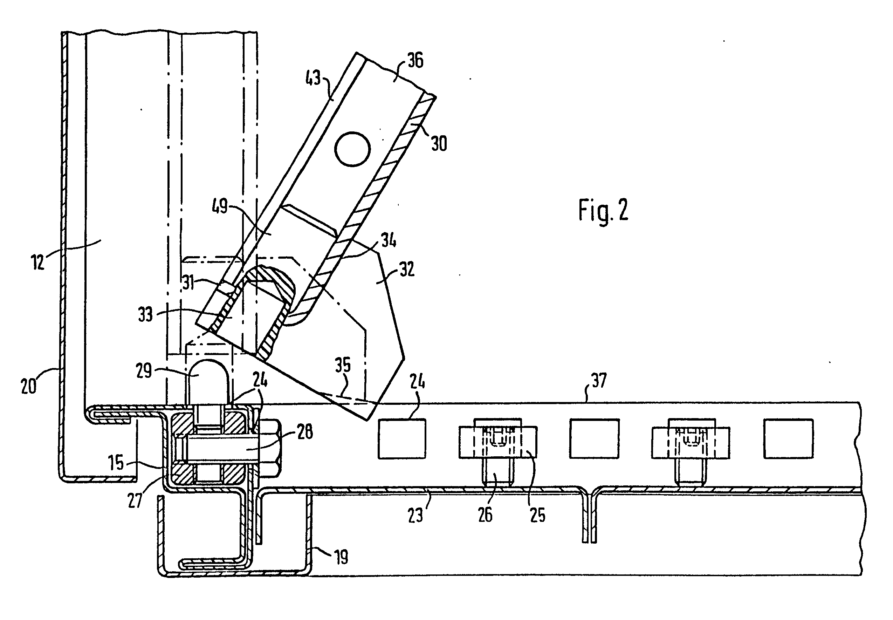

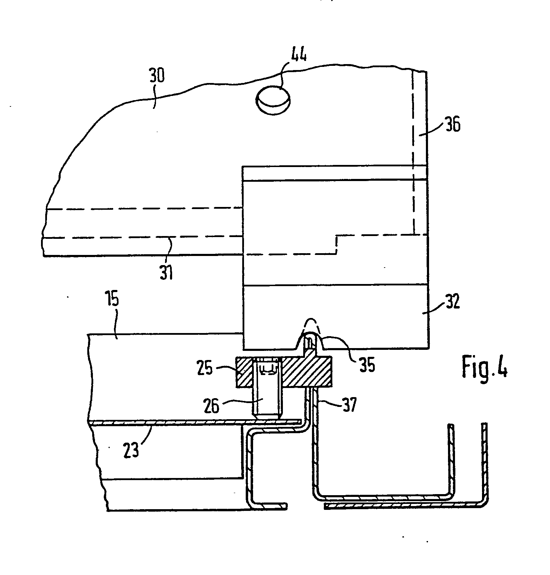

Wie Fig. 2 zeigt, sind an der Unterkante der Montageplatte 30 Kunststoff-Führungsblöcke 32 angebracht, die senkrecht zur Montageplatte 30 verlaufende Führungsnuten 35 aufweisen. Die Kunststoff-Führungsblöcke 32 sind, wie Fig. 4 zeigt, an den Enden der Unterkante der Montageplatte 30 angebracht und zwar bündig mit den an den vertikalen Seiten der Montageplatte 30 nach hinten rechtwinklig abgewinkelten Seitenrändern 36. Die Kunststcff-Führungsblöcke 32 haben einen von der Oberseite ausgehenden, parallel zur Montageplatte 30 verlaufenden Schlitz 34, der ein Steckteil 49 abteilt. An der Unterkante der Montageplatte 30 weist der nach hinten gebogene Rand 31 in den Eckbereichen Aussparungen auf, so daß die Kunststoff-Führungsblöcke 32 an die Unterkante der Montageplatte 30 angesteckt werden können. Dabei hintergreift das Steckteil 49 die Montageplatte 30. Bei Paß- oder Preßsitz wird ein ausreichender Halt der Kunststoff-Führungsblöcke 32 an der Montageplatte 30 sichergestellt.

Die Kunststoff-Führungsblöcke 32 stehen an der Unterkante und der Vorderseite der Montageplatte 30 ab. Die Führungsnuten 35 sind im Bereich der vorderen unteren Kante der Kunststoff-Führungsblöcke 32 eingebracht und zwar so, daß der Nutgrund jeweils im spitzen Winkel zur Montageplatte 30 steht. Damit wird in der Schrägstellung der Montageplatte 30 eine ausreichende Abstützfläche und eine eindeutige Führung an Führungsstegen von zwei Führungsschienen 37 erreicht. Diese beiden Führungsschienen 37 sind zwischen den beiden seitlichenund horizontal verlaufenden Rahmenschenkeln 11 angeordnet ud so mit den hinteren und vorderen horizontalen Rahmenschenkeln 15 und 16 verbunden, daß die Führungsstege oben bündig mit diesen Rahmenschenkeln abschließen. Dabei ist der Abstand der Führungsstege der beiden Führungsschienen 37 auf den Abstand der Führungsnuten 35 der beiden an der Montageplatte 30 befestigten Kunststoff-Führungsblöcke 32 abgestimmt.

Im Bereich der Steckteile 49 der Kunststoff-Führungsblöcke 32 sind als Sacklochbohrungen ausgebildete Steckaufnahmen 33 eingebracht, die parallel zur Montageplatte 30 ausgerichtet und zur Unterseite hin offen sind.

Beim Ausführungsbeispiel sind an dem hinteren unteren horizontalen Rahmenschenkel 15 zwei Steckbolzen 29 befestigt, deren Abstand auf den Abstand der Steckaufnahmen 33 der beiden Kunststoff-Führungsblöcke 32 abgestimmt ist. Die freien oberen Enden der Steckbolzen 29 sind halbkugelförmig und stehen über die Oberseite der Führungsstege der Führungsschienen 37 vor Die Steckbolzen 29 haben ein im Durchmesser reduziertes Gewindeteil, das durch ein Loch 24 in der oberen horizontalen Profilwand des Rahmenschenkels 15 eingeführt und in das Mutterteil 27 eingeschraubt ist. Das Mutterteil 27 ist in dem Innenraum des Rahmenschenkels 15 verstellbar geführt und wird mittels der Schraube 28 daran festgelegt, die durch ein Loch 24 in der inneren vertikalen Profilwand des Rahmenschenkels 15 eingeführt und in das Mutterteil 27 eingeschraubt ist. Das Mutterteil 27 hat daher zwei senkrecht zueinander stehende Gewindeaufnahmen. Die Lochteilung im Rahmenschenkel 15 bestimmt dann die Stufen, mit denen der Abstand der Steckbolzen 29 verändert werden kann. Die Einschubendstellung der in Schrägstellung auf den Führungsschienen 37 eingeschobenen Montageplatte 30 wird durch Anschläge oder dgl. oder durch die Steckbolzen 29 selbst so begrenzt, daß beim vertikalen Aufrichten der Montageplatte 30 die Steckaufnahmen 33 auf die Steckbolzen 29 aufgeschoben werden. Dabei ist der halbkugelförmige Auslauf der Steckbolzen 29 am freien oberen Ende von Bedeutung. Die Unterkante der aufgerichteten Montageplatte 30 ist dann sofort festgelegt, wie die strichpunktiert in Fig. 2 eingezeichnete Stellung der Montageplatte 30 erkennen läßt. Die Montageplatte 30 ist beim Ausführungsbeispiel innerhalb des hinteren vertikalen Rahmens des Rahmengestelles 10, von dem die Rahmenschenkel 12, 15 und 17 in Fig. 1 zu sehen sind, angeordnet.

Der Abstand der Montageplatte 30 zur Rückwand 20 kann auch größer gewählt werden. Die Steckbolzen 29 sind dann auf Laschen befestigt, die an den Führungsstegen der Führungsschienen 37 oder den unteren seitlichen horizontalen Rahmenschenkeln 11 befestigt sind. Dabei ist lediglich wieder darauf zu achten, daß die Steckbolzen 29 den richtigen Abstand zueinander haben und daß die Einschubbewegung der schräg gestellten Montageplatte 30 entsprechend begrenzt wird. Aus diesem Grunde sind auch in die Führungsstege der Führungsschienen 37 eine Reihe von Löchern 24 in vorzugsweise gleicher Lochteilung und Lochausbildung wie bei den Rahmenschenkeln des Rahmengestelles 20 eingebracht.

Wie die Fig. 2 und 4 weiter zeigen, können in die Löcher 24 der Führungsschienen 37 Mutterteile 25 eingesteckt werden, die eine Spannschraube 26 aufnehmen, mit der Bodenbleche 23 an den Führungsschienen 37 selbst, an dem Rahmengestell 10 oder an der Bodenplatte 19 festlegbar und gegen diese verspannbar sind.

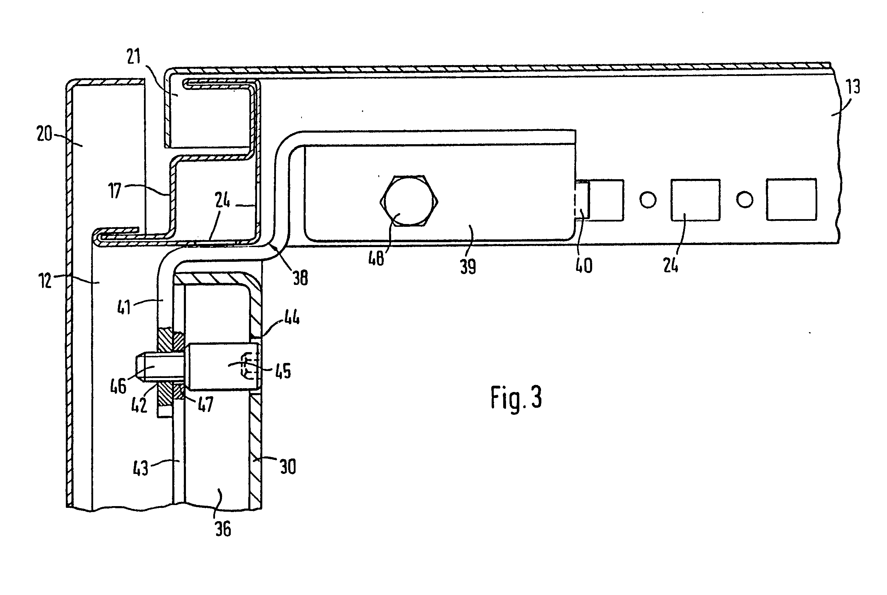

Ist die Montageplatte 30 aufgerichtet und mit ihrer Unterkante durch die Steckbolzen 29 gehalten, dann muß lediglich die Oberkante der Montageplatte 30 noch mit dem Rahmengestell 10 verbunden werden. Fig. 3 zeigt eine Befestigungsart mit einem Befestigungswinkel 38, der für die Anordnung der Montageplatte 30 im hinteren vertikalen Rahmen des Rahmengestelles 10 geeignet ist. Die vertikalen Seitenränder 36 der Montageplatte 30 sind an ihren freien Kanten als Befestigungsflansche 43 nach innen rechtwinklig abgebogen.

Der Befestigungsschenkel 41 des Befestigungswinkels 38 liegt auf der Außenseite des Befestigungsflansches 43 und trägt die Gewindebohrung 42. Die Verbindungsschraube 46 hat einen im Durchmesser größeren Kopf 45, der durch die fluchtende Bohrung 44 in der Montageplatte 30 eingeführt wird und sich im Bereich der Durchgangsbohrung 47 in den Befestigungsflansch 43 für die Verbindungsschraube 46 abstützt. Daher stört die Verbindungsschraube 46 den Aufbau von Bauteilen auf der Montageplatte 30 nicht mehr.

Der Befestigungswinkel 38 übergreift die Oberkante der Montageplatte 30 und kann nun je nach Ausgestaltung mit dem oberen hinteren horizontalen Rahmenschenkel 17 oder einem der oberen seitlichen, vertikalen Rahmenschenkel 13 verbunden werden. Dabei kann im ersten Fall der Befestigungswinkel 38 Z-förmig gestaltet und mit dem freien Schenkel direkt mit dem Rahmenschenkel 17 verschraubt werden, wobei gleiche Mutterteile 27 verwendet werden können. Bevorzugt werden zwei Befestigungswinkel 38 verwendet, die an den beiden Enden der Oberkante der Montageplatte 30 befestigt werden.

Bei dem in Fig. 4 gezeigten Ausführungsbeispiel schließt sich an den zweiten Schenkel des Z-förmigen Befestigungswinkels 38 der L-förmige Befestigungsschenkel 39 an, der mit dem seitlichen Rahmenschenkel 13 verbunden wird.

Die Schraube 48 wird durch ein Loch 24 des Rahmenschenkels 13 hindurch in ein in den Innenraum desselben eingeführtes Mutterteil eingeschraubt. Das Mutterteil kann wieder mit einer weiteren Schraube am Rahmenschenkel 13 gehalten sein. Der Befestigungsschenkel 39 trägt die abgebogene Arretierungslasche 40, die in das Loch 24 des Rahmenschenkels 13 eingreift und den Befestigungsschenkel 39 trotz Einschraubbefestigung verdrehungssicher am Rahmenschenkel 13 festhält.

Die Lochteilung bestimmt auch hier die Stufen, in denen der Abstand der Montageplatte 30 zur Rückwand 20 des Schaltschrankes verändert werden kann.

Die Kunststoff-Führungsblöcke 32 können in dem vor der Montageplatte 30 liegenden Bereich, vorzugsweise im Bereich der abgeschrägten vorderen Oberkante, mit Befestigungsaufnahmen zum Anbringen einer Schiene, wie Kabelabfangschiene, Schutzleiterschiene oder dgl., versehen sein. Diese Schiene hat dann stets eine definierte Zuordnung zur Montageplatte 30 und bildet mit dieser eine verstellbare Einheit.

## Patentansprüche

1. Schaltschrank mit einem aus Rahmenschenkeln zusammengesetzten und mittels Wandelementen und einer Schranktür (22) verschließbaren Rahmengestell (10) und mit einer parallel zur Rückwand (20) am Rahmengestell (10) befestigbaren Montageplatte, (30) dadurch gekennzeichnet, daß das Rahmengestell (10) zwischen den beiden unteren seitlichen und horizontal verlaufenden Rahmenschenkeln (11) mindestens zwei parallel dazu ausgerichtete Führungsschienen (37) mit einem nach oben stehenden Führungssteg aufweist, daß an der Unterseite der Montageplatte (30) auf den Abstand der Führungsschienen (37) abgestimmt Kunststoff-Führungsblöcke (32) mit jeweils einer Führungsnut (35) zur Aufnahme des Führungssteges der zugeordneten Führungsschiene (37) angebracht sind, daß die Kunststoff-Führungsblöcke (32) mit parallel zur Montageplatte (30) ausgerichteten und zur Unterseite hin offenen Steckaufnahmen (33) versehen sind, daß am Rahmengestell (10) im hinteren Bereich des Rahmengestelles (10) oder der Führungsschienen (37) auf den Abstand der Steckaufnahmen (33) in den Kunststoff-Führungsblöcken (32) abgestimmt nach oben ragende Steckbolzen (29) zum Einführen in die Steckaufnahmen (33) und zum Festhalten der Unterkante der Montageplatte (30) befestigt sind und daß die Montageplatte (30) im Bereich ihrer Oberkante mittels Befestigungswinkeln (38) an dem Rahmengestell (10) festlegbar ist.

2. Schaltschrank nach Anspruch 1, dadurch gekennzeichnet, daß die Führungsstege der Führungsschienen (37) bündig mit den bündigen Oberseiten der unteren, horizontalen Rahmenschenkel (11, 15, 16) des Rahmengestelles (10) abschließen.

3. Schaltschrank nach Anspruch 1 oder 2, dadurch gekennzeichnet, daß die Kunststoff-Führungsblöcke (32) an der Unterkante und der Vorderseite der Montageplatte (30) vorstehen und daß die Führungsnuten (35) im Bereich der unteren vorderen Kante senkrecht zur Ebene der Montageplatte (30) in die Kunststoff-Führungsblöcke (32) eingebracht sind, wobei der Nutgrund der Führungsnuten (35) jeweils im spitzen Winkel zur Montageplatte (30) steht.

4. Schaltschrank nach einem der Ansprüche 1 bis 3, dadurch gekennzeichnet, daß zwei Kunststoff-Führungsblöcke (32) an den Enden der Unterkante der Montageplatte (30) angebracht sind, die mit an den vertikalen Seiten der Montageplatte (30) rechtwinklig nach hinten abgebogenen Seitenrändern (36) bündig abschließen.

5. Schaltschrank nach Anspruch 4, dadurch gekennzeichnet, daß die Kunststoff-Führungsblöcke (32) in der Oberseite einen parallel zur Montageplatte (30) ausgerichteten Schlitz (34) aufweisen, der ein Steckteil (49) abteilt und daß das Steckteil (49) durch eine Aussparung in einem an der Unterkante der Montageplatte (30) rechtwinklig nach hinten abgebogenen Rand (31) hinter die Montageplatte (30) einführbar ist und den Kunststoff-Führungsblock (32) an der Montageplatte (30) festlegt.

6. Schaltschrank nach Anspruch 5, dadurch gekennzeichnet, daß die als Sacklochbohrungen ausgebildeten Steckaufnahmen (33) im Bereich der Steckteile (49) in die Unterseiten der Kunststoff-Führungsblöcke (32) eingebracht sind.

7. Schaltschrank nach einem der Ansprüche 1 bis 6, dadurch gekennzeichnet, daß die Steckbolzen (29) an ihren freien oberen Enden halbkugelförmig auslaufen.

8. Schaltschrank nach einem der Ansprüche 1 bis 7, dadurch gekennzeichnet, daß jeder Steckbolzen (29) mit einem im Durchmesser reduzierten Gewindeteil versehen ist, das in ein am Rahmengestell (10) oder an einer der Führungsschienen (37) befestigtes Mutterteil (27) eingeschraubt ist.

9. Schaltschrank nach Anspruch 8, dadurch gekennzeichnet, daß die Rahmenschenkel des Rahmengestelles (10) als Hohlprofilabschnitte ausgebildet sind, die einen im Querschnitt etwa quadratischen Innenraum aufweisen, daß zumindest ein Teil der Profilwände aller Rahmenschenkel mit Reihen von Löchern (24) versehen sind und daß die Mutterteile (27) in dem Innenraum des hinteren unteren und horizontal verlaufenden Rahmenschenkels (15) verstellbar geführt und mittels zusätzlicher Schrauben (28) daran festgelegt sind.

10. Schaltschrank nach Anspruch 8 oder 9, dadurch gekennzeichnet, daß die oberen horizontalen und die inneren vertikalen Profilwände der unteren horizontalen Rahmenschenkel (11, 15, 16) jeweils mit fluchtenden Reihen von Löchern (24) versehen sind.

11. Schaltschrank nach einem der Ansprüche 1 bis 7, dadurch gekennzeichnet, daß die Führungsstege der Führungsschienen (37) mit Reihen von Löchern (24) versehen sind und daß die Steckbolzen (29) an Laschen befestigt sind, die an den Führungsschienen (37) oder den parallel dazu verlaufenden seitlichen unteren Rahmenschenkeln (11) angebracht sind.

12. Schaltschrank nach einem der Ansprüche 1 bis 11, dadurch gekennzeichnet, daß in die Löcher (24) der Führungsstege der Führungsschienen (37) Mutterteile (25) einsetzbar sind, die Spannschrauben (26) zur Festlegung von Bodenblechen (23) am Rahmengestell (10) aufnehmen.

13. Schaltschrank nach einem der Ansprüche 1 bis 12, dadurch gekennzeichnet, daß die an den vertikalen Seiten der Montageplatte (30) abgewinkelten Seitenränder (36) oder der an der Oberkante der Montageplatte (30) abgebogene Rand (31) an den freien Kanten als Befestigungsflansche (43) nach innen abgebogen sind, daß die Befestigungswinkel (38) mit einem Befestigungsschenkel (41) auf den Außenseiten der Befestigungsflansche (43) verschraubt sind und daß die Befestigungswinkel (38) mit anderen Befestigungsschenkeln (39) mit den oberen seitlichen, horizontal verlaufenden Rahmenschenkeln (13) oder dem hinteren oberen, horizontal verlaufenden Rahmenschenkel (17) des Rahmengestelles (10) verbunden sind.

14. Schaltschrank nach Anspruch 13, dadurch gekennzeichnet, daß die Befestigungswinkel (38) die Oberkante der Montageplatte (30) übergreifen, so daß die mit den oberen horizontalen Rahmenschenkeln (13, 17) des Rahmengestelles (10) verbindbaren Befestigungsschenkel (39) vor der Montageplatte (30) angeordnet sind.

15. Schaltschrank nach Anspruch 13 oder 14, dadurch gekennzeichnet, daß die den Befestigungsflanschen (43) der Montageplatte (30) zugeordneten Befestigungsschenkel (41) der Befestigungswinkel (38) mit Gewindebohrungen (42) für mit Kopf (45) versehene Verbindungsschrauben (46) tragen und daß die Befestigungsflansche (43) mit Durchgangsbohrungen (47) für die Verbindungsschrauben (46) und die Montageplatte (30) mit fluchtenden Einführungsbohrungen (44) für den Kopf (45) der Verbindungsschrauben (46) versehen sind.

16. Schaltschrank nach einem der Ansprüche 1 bis 15, dadurch gekennzeichnet, daß die den oberen horizontalen Rahmenschenkeln (13, 17) des Rahmengestelles (10) zugeordneten Befestigungsschenkel (39) der Befestigungswinkel (38) mit in ein Loch (24) des Rahmenschenkels (13, 17) einführbarer Arretierungslaschen (40) versehen sind und daß die Befestigungsschenkel (39) mittels einer Schraube (48) mit einem im Innenraum des Rahmenschenkels (13, 17) angeordneten und daran festgelegten Mutterteil verbunden sind.

17. Schaltschrank nach einem der Ansprüche 1 bis 16, dadurch gekennzeichnet, daß die Einschubbewegung der geneigt auf die Führungsschienen (37) gesetzten Montageplatte (30) so begrenzt ist, daß sich beim Aufrichten der Montageplatte (30) in die Vertikale die Steckaufnahmen (33) der Kunststoff-Führungsblöcke (32) auf die Steckbolzen (29) aufschieben.

18. Schaltschrank nach einem der Ansprüche 1 bis 17, dadurch gekennzeichnet, daß die Kunststoff-Führungsblöcke (32), vorzugsweise im Bereich der abgeschrägten vorderen Oberkante, mit Befestigungsaufnahmen zum Anbringen einer Schiene, wie Kabelabfangschiene, Schutzleiterschiene cder dgl., versehen ist.

**Revendications**

1. Armoire de commande, comportant un bâti-cadre (10), constitué par des traverses de cadre et pouvant être fermé au moyen d'éléments de cloison et d'une porte (22) d'armoire, ainsi qu'une plaque (30) de montage, pouvant être fixée sur le bâti-cadre (10) parallèlement à la cloison arrière (20), armoire caractérisée en ce que le bâti-cadre (10) présente, entre les deux traverses (11) inférieures latérales de cadre et s'étendant horizontalement, au moins deux glissières (37) de guidage disposées parallèlement aux traverses et comportant une barrette de guidage située vers le haut, en ce que sont fixés, sur la plaque inférieure de la plaque (30) de montage, des blocs (32) de guidage, en matière plastique, accordés à la distance des glissières (37) et comportant chacun une rainure (35) de guidage pour la réception de la barrette de guidage de la glissière (37) associée, en ce que les blocs (32) de guidage, en matière plastique, sont pourvus de logements (33) pour enfichage, alignés parallèlement à la plaque (30) de montage et ouverts vers la face inférieure; en ce qu'il est fixé sur le bâti-cadre (10), dans la région arrière du bâti-cadre (10) ou des glissières (37), et accordés à la distance des logements (33) dans les blocs (32) de guidage, en matière plastique, des vis-tétons (29) faisant saillie vers le haut, qui sont fixées en vue de leur introduction dans les logements (33) et du maintien de l'arête inférieure de la plaque (30) de montage, et en ce que la plaque (30) de montage peut être fixée, dans la région de son arête supérieure et au moyen d'équerres (38) de fixation, sur le bâti-cadre (10).

2. Armoire de commande selon la revendication 1, caractérisée en ce que les barrettes de guidage des glissières (37) s'achèvent au ras des faces supérieures affleurantes des traverses (11, 15, 16) inférieures horizontales du bâti-cadre (10).

3. Armoire de commande selon la revendication 1 ou 2, caractérisée en ce que les blocs (32) de guidage, en matière plastique, font saillie de l'arête inférieure et de la face avant de la plaque (30) de montage, et en ce que les rainures (35) de guidage sont, dans la région de l'arête antérieure inférieure, disposées perpendiculairement au plan de la plaque (30) de montage dans les blocs (32) de guidage, en matière plastique, le fond des rainures (35) de guidage formant à chaque fois un angle aigu avec la plaque (30) de montage.

4. Armoire de commande selon l'une des revendications 1 à 3, caractérisée en ce que deux blocs (32) de guidage, en matière plastique, sont fixés aux extrémités de l'arête inférieure de la plaque (30) de montage et s'achèvent, par leurs bords latéraux (36) pliés à angle droit vers l'arrière, au ras des faces verticales de la plaque (30) de montage.

5. Armoire de commande selon la revendication 4, caractérisée en ce que les blocs (32) de guidage, en matière plastique présentent sur la face supérieure une fente (34) alignée parallèlement à la plaque (30) de montage, qui cloisonne une partie enfichable (49); et en ce que la partie enfichable (49) peut être introduite, par un évidement, ménagé dans un bord (31) plié à angle droit vers l'arrière, sur l'arête inférieure de la plaque (30), de montage, derrière la plaque (30) de montage, et fixe le bloc (32) de guidage, en matière plastique, sur la plaque (30) de montage.

6. Armoire de commande selon la revendication 5, caractérisée en ce que les logements (33) d'enfichage, constitués par des trous borgnes dans la région des parties enfichables (49), sont aménagés dans les faces inférieures des blocs (32) de guidage, en matière plastique.

7. Armoire de commande selon l'une des revendications 1 à 6, caractérisée en ce que les vis-tétons (29) se terminent en forme d'hémisphères à leurs extrémités supérieures libres.

8. Armoire de commande selon l'une des revendications 1 à 7, caractérisée en ce que chaque vis-téton (29) est pourvue d'une partie filetée de diamètre réduit, qui est vissée dans une pièce (27) formant écrou, fixée sur le bâti-cadre (10) ou sur l'une des glissières (37).

9. Armoire de commande selon la revendication 8, caractérisée en ce que les traverses de cadre du bâti-cadre (10) sont constituées par des éléments profilés creux, qui présentent à l'intérieur une section sensiblement carrée; en ce qu'au moins une partie des parois profilées de toutes les traverses de cadre est pourvue de rangées de trous (24) et en ce que les pièces (27) formant écrou sont guidées, avec possibilité d'ajustage à l'intérieur de la traverse (15) arrière inférieure de cadre s'étendant horizontalement, et sont fixées à cette traverse au moyen de vis (28) supplémentaires.

10. Armoire de commande selon la revendication 8 ou 9, caractérisée en ce que les parois profilées supérieures horizontales et les parois profilées intérieures verticales des traverses (11, 15, 16) horizontales inférieures de cadre sont pourvues chacune de rangées de trous (24) alignés.

11. Armoire de commande selon l'une des revendications 1 à 7, caractérisée en ce que les barrettes de guidage des glissières (37) sont pourvues de rangées de trous (24) et en ce que les vis-tétons (29) sont fixées à des attaches, qui sont placées sur les glissières (37) ou sur les traverses (11) latérales inférieures de cadre qui s'étendent parallèlement à ces glissières.

12. Armoire de commande selon l'une des revendications 1 à 11, caractérisée en ce que, dans les trous (24) des barrettes de guidage des glissières (37) peuvent être insérées des pièces (25) formant écrou et qui reçoivent les vis (26) de serrage destinées à la fixation de tôles (23) de base sur le bâti-cadre (10).

13. Armoire de commande selon l'une des revendications 1 à 12, caractérisée en ce que les bords latéraux (36), repliés sur les faces verticales de la plaque (30) de montage ou le bord (31), plié sur l'arête supérieure de la plaque (30) de montage, est ou sont pliés vers l'intérieur sur les arêtes libres pour constituer des rebords (43) de fixation, en ce que les équerres (38) de fixation sont vissées par une branche (41) de fixation sur les faces extérieures des rebords (43) de fixation, et en ce que les équerres (38) de fixation sont raccordées avec d'autres branches (39) de fixation, avec les traverses (13) supérieures latérales de cadre s'étendant horizontalement, ou avec la traverse (17) arrière supérieure de cadre, s'étendant horizontalement, du bâti-cadre (10).

14. Armoire de commande selon la revendication 13, caractérisée en ce que les équerres (38) de fixation recouvrent le bord supérieur de la plaque (30) de montage, de manière que les branches (39) de fixation, raccordables avec les traverses (13, 17) horizontales supérieures du bâti-cadre, sont disposés devant la plaque (30) de montage.

15. Armoire de commande selon la revendication 13 ou 14, caractérisée en ce que les branches (41) des équerres (38) de fixation associées aux rebords (43) de fixation de la plaque (30) de montage comportent des perçages filetés (42) pour des vis (46) d'assemblage pourvues d'une tête (45), en ce que les rebords (43) de fixation sont pourvus de perçages (47) pour le passage des vis (46) d'assemblage, et en ce que la plaque (30) de montage comporte des perçages (44) alignés d'introduction, pour que la tête (45) des vis (46) d'assemblage affleure.

16. Armoire de commande selon l'une des revendications 1 à 15, caractérisée en ce que les branches (39) de fixation des équerres (38) de fixation associées aux branches (13, 17) horizontales supérieures du bâti-cadre (10) sont pourvues d'attaches (40) d'arrêt, introductibles dans un trou (24) de la traverse (13, 17) de cadre, et en ce que les branches (39) de fixation sont reliées au moyen d'une vis (48) à une pièce formant écrou, disposée à l'intérieur de la traverse (13, 17) de cadre et reliée à cette traverse.

17. Armoire de commande selon l'une des revendications 1 à 16, caractérisée en ce que le mouvement d'introduction de la plaque (30) de montage, placée inclinée sur les glissières (37), est limité de manière telle que, lors du dressage de la plaque (30) de montage à la verticale, les logements enfichables (33) des blocs (32) de guidage, en matière plastique, s'enfoncent sur les vis-tétons (29).

18. Armoire de commande selon l'une des revendications 1 à 17, caractérisée en ce que les blocs (32) de guidage, en matière plastique sont pourvus, de préférence, dans la zone de l'arête supérieure avant biseautée, de logements de fixation pour la mise en place d'un rail, tel qu'un rail de soutien de câbles, un rail d'appui pour conducteur de protection ou similaire.

**Claims**

1. Switchgear cabinet, comprising a frame (10), which is composed of frame portions and is closable by means of wall elements and a cabinet door (22), and a mounting plate (30) which is securable on the frame (10) parallel to the rear wall (20), cahracterised in that, between the two lower, lateral and horizontally extending frame portions (11), the frame (10) is provided with at least two guide rails (37), which are aligned parallel thereto and have an upwardly extending guide web; in that plastics material guide blocks (32) are attached to the underside of the mounting plate (30) so as to correspond to the spacing between the guide rails (37), each guide block being provided with a guide groove (35) for receiving the guide web of the associated guide rail (37); in that the plastics material guide blocks (32) are provided with recesses (33), which are aligned parallel to the mounting plate (30) and are open towards the underside; in that insert bolts (29) are secured on the frame (10) in the rear region of the frame (10) or of the guide rails (37) and protrude upwardly, so as to correspond to the spacing between the recesses (33) in the plastics material guide blocks (32), for introduction into the recesses (33) and for securely retaining the lower edge of the mounting plate (30); and in that, in the region of its upper edge, the mounting plate (30) is securable on the frame (10) by means of securing brackets (38).

2. Switchgear cabinet according to claim 1, characterised in that the guide webs of the guide rails (37) terminate flush with the flush upper surfaces of the lower, horizontal frame portions (11, 15, 16) of the frame (10).

3. Switchgear cabinet according to claim 1 or 2, characterised in that the plastics material guide blocks (32) protrude at the lower edge and at the front end of the mounting plate (30); and in that, in the region of the lower, front edge, the guide grooves (35) are formed in the plastics material guide blocks (32) at right angles to the plane of the mounting plate (30), the base of each of the guide grooves (35) extending at an acute angle relative to the mounting plate (30).

4. Switchgear cabinet according to one of claims 1 to 3, characterised in that two plastics material guide blocks (32) are attached to the ends of the lower edge of the mounting plate (30) and terminate flush with lateral edges (36), which are bent-back at right angles on the vertical sides of the mounting plate (30).

5. Switchgear cabinet according to claim 4, characterised in that the plastics material guide blocks (32) are provided, in the upper surface, with a slot (34), which is aligned parallel to the mounting plate (30) and divides an insert member (49); and in that the insert member (49) is insertable behind the mounting plate (30) through a recess in an edge (31), which is bent-back at right angles at the lower edge of the mounting plate (30) and secures the plastics material guide block (32) on the mounting plate (30).

6. Switchgear cabinet according to claim 5, characterised in that, in the region of the insert members (49), the recesses (33), which are in the form of blind bores, are formed in the undersides of the plastics material guide blocks (32).

7. Switchgear cabinet according to one of claims 1 to 6, characterised in that the insert bolts (29) extend in a dome-shaped manner at their free, upper ends.

8. Switchgear cabinet according to one of claims 1 to 7, characterised in that each insert bolt (29) is provided with a threaded portion, which has a reduced diameter and is screw-connected to a nut member (27), which is secured on the frame (10) or on one of the guide rails (37).

9. Switchgear cabinet according to claim 8, characterised in that the frame portions of the frame (10) are in the form of hollow profile sections, which are provided with an interior having a substantially square cross-section; in that at least a proportion of the profile walls of all the frame portions is provided with rows of apertures (24); and in that the nut members (27) are adjustably guided in the interior of the rear, lower and horizontally extending frame portion (15) and are secured thereon by means of additional screws (28).

10. Switchgear cabinet according to claim 8 or 9, characterised in that the upper, horizontal profile walls and the inner, vertical profile walls of the lower, horizontal frame portions (11, 15, 16) are each provided with aligned rows of apertures (24).

11. Switchgear cabinet according to one of claims 1 to 7, characterised in that the guide webs of the guide rails (37) are provided with rows of apertures (24); and in that the insert bolts (29) are secured on lugs, which are attached to the guide rails (37) or the lateral, lower frame portions (11), which extend parallel thereto.

12. Switchgear cabinet according to one of claims 1 to 11, characterised in that nut members (25) are insertable into the apertures (24) in the guide webs of the guide rails (37) and receive clamp bolts (26) for securing base plates (23) on the frame (10).

13. Switchgear cabinet according to one of claims 1 to 12, charcterised in that the lateral edges (36), which are bent-over at the vertical sides of the mounting plate (30), or the edge (31), which is bent-down at the upper edge of the mounting plate (30), are bent inwardly at the free edges as securing flanges (43); in that the securing brackets (38) are screw-connected to a securing arm (41) on the external surfaces of the securing flanges (43); and in that the securing brackets (38) are connected, by other securing arms (39), to the upper, lateral, horizontally extending frame portions (13) or to the rear, upper, horizontally extending frame portion (17) of the frame (10).

14. Switchgear cabinet according to claim 13, characterised in that the securing brackets (38) overlap the upper edge of the mounting plate (30), so that the securing arms (39), which are connectable to the upper, horizontal frame portions (13, 17) of the frame (10), are disposed in front of the mounting plate (30).

15. Switchgear cabinet according to claim 13 or 14, characterised in that the securing arms (41) of the securing brackets (38), which arms are associated with the securing flanges (43) of the mounting plate (30), have threaded bores (42) formed therein for receiving connecting screws (46) which are provided with heads (45); and in that the securing flanges (43) are provided with through-bores (47) for receiving the connecting screws (46), and the mounting plate (30) is provided with aligned insert bores (44) for receiving the heads (45) of the connecting screws (46).

16. Switchgear cabinet according to one of claims 1 to 15, characterised in that the securing arms (39) of the securing brackets (38), which arms are associated with the upper, horizontal frame portions (13, 17) of the frame (10), are provided with locking lugs (40), which are insertable into an aperture (24) in the frame portion (13, 17); and in that the securing arms (39) are connected to a nut member, which is disposed in the interior of the frame portion (13, 17) and secured thereon, by means of a screw (48).

17. Switchgear cabinet according to one of claims 1 to 16, characterised in that the insert movement of the mounting plate (30), which is positioned inclinedly upon the guide rails (37), is so limited that, when the mounting plate (30) is aligned into the vertical, the recesses (33) in the plastics material blocks (32) are pushed onto the insert bolts (29).

18. Switchgear cabinet according to one of claims 1 to 17, characterised in that the plastics material guide blocks (32), preferably in the region of the inclined, front, upper edge, are provided with securing receiver means for the mounting of a rail, such as a cable collector rail, a protective conductor rail, or the like.

Fig.1

Fig.2

Fig. 3

EP 0 167 833 B1

Fig.4